# FASCICULE DE BREVET EUROPEEN

(11) **EP 2 955 060 B1**
(45) Date de publication et mention de la délivrance du brevet: **24.07.2019**
(21) Numéro de dépôt: 15171337.7
(22) Date de dépôt: 10.06.2015
(51) Int. Cl.: B60P 3/36, B60R 15/02

(54) **PLACARD ESCAMOTABLE AU-DESSUS D'UN BAC DE DOUCHE, LAISSANT DANS LA POSITION ESCAMOTÉE, LIBRE ACCÈS AUDIT BAC DE DOUCHE**
VERSENKBARER EINBAUSCHRANK ÜBER EINER DUSCHWANNE, DER IN VERSENKTER POSITION FREIEN ZUTRITT ZUR DUSCHWANNE LÄSST
RETRACTABLE CABINET ABOVE A SHOWER TRAY, ALLOWING FREE ACCESS TO THE SHOWER TRAY WHEN IN THE RETRACTED POSITION

(30) Priorité: 11.06.2014 FR 1455277
(43) Date de publication de la demande: 16.12.2015
(73) Titulaire: Rapido, 53100 Mayenne (FR)
(72) Inventeur: Rousseau, Pierre, 53940 Saint-Berthevin (FR)
(74) Mandataire: Hege, Frédéric

(56) Documents cités:
- WO-A1-00/27266
- WO-A1-89/04778
- DE-U1-202009 004 485
- GB-A- 2 047 635

## Description

La présente invention concerne un élément de mobilier (1) comportant au moins une face plane et un moyen d'articulation de l'élément par rapport à une huisserie (7) pourvue d'une ouverture, destiné à rendre l'élément de mobilier mobile entre une position déployée en dehors de l'huisserie et une position escamotée à l'intérieur de l'huisserie en passant par l'ouverture.

Un élément de mobilier de ce type, connu du document US 806 277 est articulé à l'huisserie au moyen d'un parallélogramme entre une position rangée à l'intérieur de l'huisserie et une position disposée devant celle-ci.

Cette articulation ne permet cependant pas un accès à l'intérieur de l'huisserie puisqu'il se retrouve comblé par l'élément de mobilier occupant sa position rangée, ou inaccessible du fait de la présence de l'élément de mobilier devant l'ouverture dans la position déployée.

Un autre élément de mobilier de ce type, décrit dans le document WO89/04778 est articulé en rotation par rapport à un montant de l'huisserie entre une position déployée en dehors de l'huisserie et une position escamotée à l'intérieur de l'huisserie en passant par l'ouverture, l'élément comprenant une première porte d'accès à son contenu interne dans la position escamotée disposée sur la paroi avant de l'élément de mobilier dans la position escamotée et coïncidant avec la paroi avant de l'huisserie. Dans sa position déployée, cet élément ne sert que de portant pour des vêtements et forme un volume inutilisé.

L'invention vise à résoudre ce problème pour proposer grâce à une articulation et un élément de mobilier simples de fabrication, un accès optimisé à l'intérieur de l'huisserie.

A cet effet, l'invention concerne un élément de mobilier (1) comportant au moins une face plane et un moyen d'articulation de l'élément par rapport à une huisserie (7) pourvue d'une ouverture, destiné à rendre l'élément de mobilier mobile entre une position déployée en dehors de l'huisserie et une position escamotée à l'intérieur de l'huisserie en passant par l'ouverture.

Selon l'invention, ledit moyen est un moyen d'articulation en rotation et est monté sur une arête de l'élément de mobilier qui est destinée à coïncider avec un montant de l'huisserie.

L'articulation en rotation de l'élément de mobilier montée sur une arête de cet élément, et coïncidant avec un montant de l'huisserie, lui permet de totalement laisser libre l'accès au contenu de l'huisserie lorsque l'élément de mobilier occupe la position déployée.

L'élément de mobilier est à section polygonale et définit dans sa position escamotée dans l'huisserie, une paroi arrière en vis à vis de la paroi arrière de l'huisserie, et une paroi avant coïncidant avec la paroi avant de l'huisserie, et des parois latérales reliant la paroi avant à la paroi arrière

Il comprend une première porte d'accès à son contenu interne dans la position escamotée disposée sur la paroi avant de l'élément de mobilier dans la position escamotée, et une deuxième porte d'accès à son contenu interne dans la position déployée.

La deuxième porte d'accès est disposée sur une paroi latérale adjacente à la paroi avant dans la position escamotée de l'élément de mobilier

L'invention peut par ailleurs présenter la caractéristique suivante :
- La deuxième porte d'accès est disposée sur la paroi latérale le plus proche de l'axe de rotation

L'invention concerne également un ensemble de mobilier comprenant une huisserie et un élément de type ci-dessus, l'axe de rotation de l'élément de mobilier coïncidant avec une arête de l'huisserie et la distance (d) séparant l'arête de l'élément de mobilier et un côté de cet élément de mobilier, étant inférieure à une valeur prédéterminée en fonction de la largeur (D) de l'ouverture de l'huisserie.

De préférence :
- dans la position escamotée dans l'huisserie, la paroi arrière de l'élément de mobilier est écartée de la paroi arrière de l'huisserie d'une distance prédéterminée, de façon à laisser un espace disponible pour un équipement de l'huisserie, tel qu'un pommeau de douche
- La hauteur de l'élément de mobilier est inférieure à la hauteur interne de l'huisserie
- La paroi inférieure de l'élément de mobilier est écartée de la paroi inférieure de l'huisserie d'une distance prédéterminée, de façon à laisser un espace disponible pour un équipement de l'huisserie, tel qu'un bac à douche ou pour pivoter au dessus d'un élément de support adjacent à l'huisserie du côté de l'axe de rotation.

L'invention concerne également un agencement intérieur de caravane ou d'autocaravane, qui comprend un ensemble de mobilier de type ci-dessus et un support adjacent à l'huisserie du côté de l'axe de rotation de l'élément de mobilier, la distance prédéterminée étant calculée pour que l'élément de mobilier pivote au dessus du support dans la position escamotée. Le support peut être constitué par une table, un lit, un coffre ou tout autre élément d'agencement intérieur.

La description détaillée qui suit présente un mode de réalisation de la présente invention, uniquement donné à titre illustratif et qui ne doit nullement être interprété comme limitatif, et leurs figures annexées parmi lesquelles
- la figure 1 représente une vue en perspective schématique d'un mode de réalisation de l'élément de mobilier selon l'invention en configuration escamotée dans l'huisserie ;
- la figure 2 illustre une vue en perspective schématique d'un mode de réalisation de l'élément de mobilier selon l'invention en configuration déployée vis à vis de l'huisserie ;
- la figure 3 montre une vue de dessus illustrant les deux configurations extrêmes de l'élément de mobilier, et deux configuration intermédiaires.

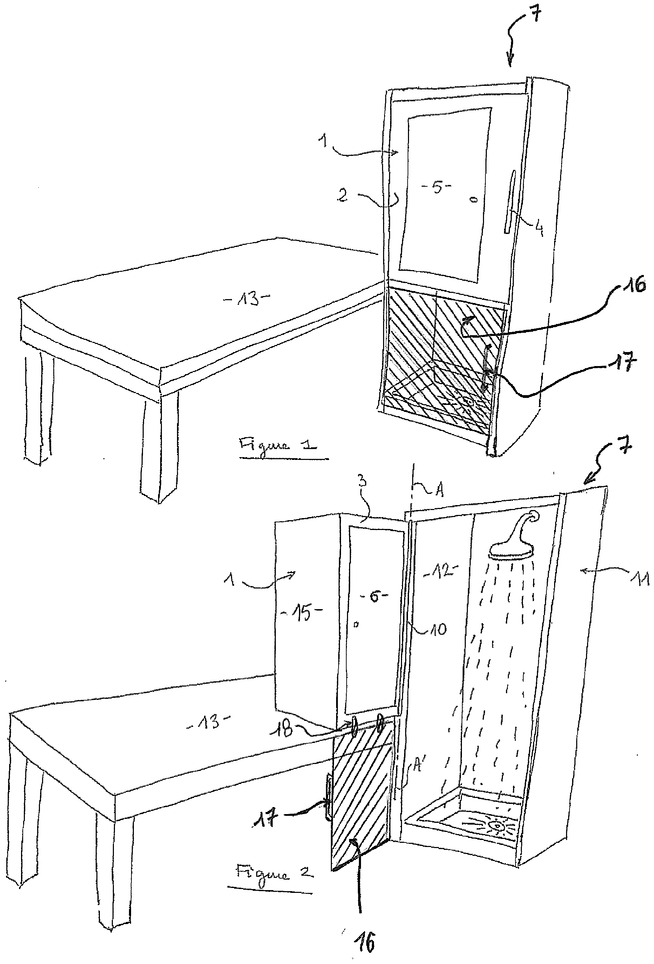

La figure 1 représente un élément de mobilier 1 selon l'invention qui est monté articulé vis à vis d'une huisserie, entre une position rangée à l'intérieur de l'huisserie et une position déployée en dehors de celle-ci.

L'huisserie en question présente la forme d'un caisson rigide avec une cavité interne délimitée par des panneaux latéraux et supérieur et inférieur. Elle comprend des montants latéraux avant.

L'élément de mobilier 1 comprend un panneau plan formant la face plane avant 2 de l'élément de mobilier 1 dans la position rangée, et un deuxième panneau plan formant la face plane 3 qui se retrouve présentée à un utilisateur lorsque l'élément de mobilier occupe la position déployée, telle que visible sur la figure 2.

Les deux faces précitées 2 et 3 comprennent chacune une porte d'accès 5, 6 au contenu de l'élément mobilier 1.

Le panneau avant est pourvu d'une poignée de préhension principale 4 disposée dans la partie de panneau encadrant la porte 5 et assurant l'entraînement de l'ensemble de l'élément de mobilier lorsque tirée par un utilisateur, alors que la porte est munie d'un bouton de préhension qui l'entraîne seule en rotation indépendamment du reste de l'élément de mobilier. De façon classique, le panneau avant comprend pour la partie encadrant la porte 5, un système de verrouillage vis à vis de l'huisserie.

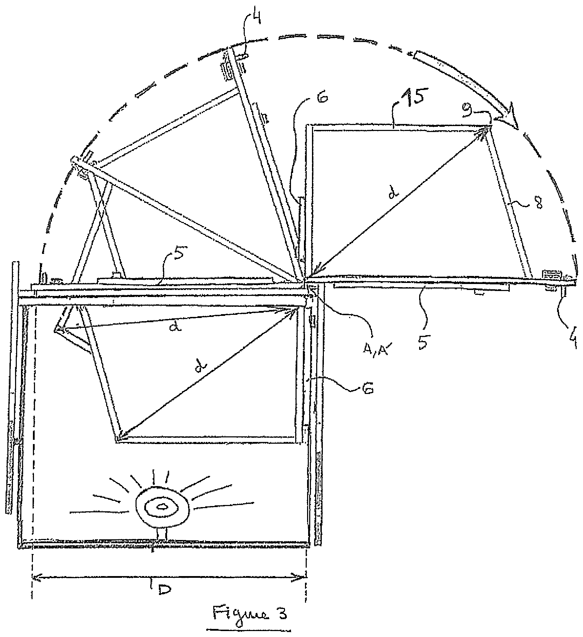

Comme visible sur la figure 3 vu de dessus, le mobilier présente en section transversale, une forme de quadrilatère définie par quatre parois consécutives dont les deux panneaux précités portant les portes 5, 6 et qui sont perpendiculaires, un troisième panneau arrière 15 parallèle au panneau avant 5 et un quatrième panneau 8 reliant les panneaux arrière et avant.

Le panneau arrière se retrouve à distance du panneau arrière de l'huisserie de façon à pouvoir loger entre ces deux panneaux arrière, un pommeau de douche monté sur un support de fixation au panneau arrière de la cabine.

Entre le panneau avant portant la première porte d'accès 5 et le panneau latéral portant la deuxième porte d'accès 6, s'étend une arête de l'élément de mobilier qui coïncidera avec un axe de rotation de l'élément de mobilier, axe se retrouvant à coïncider avec un bord latéral avant de l'huisserie 7.

Conformément à la figure 3, les dimensions des panneaux de l'élément sont étudiées pour que la diagonale s'étendant depuis l'axe de rotation jusqu'au coin opposé 9 de l'élément de mobilier soit inférieure à la largeur D de l'ouverture de l'huisserie par laquelle l'élément passe entre ses positions rangée et déployée.

Le panneau latéral 8 opposé à l'axe A, A' est incliné de façon à diverger depuis le coin 9 en direction du panneau avant 5 de façon à maximiser l'espace interne de l'élément de mobilier.

Comme visible sur la figure 2, l'élément de mobilier est monté par une charnière de type classique 10, sur un montant latéral avant d'une huisserie 11 constituée dans l'exemple représenté par une cabine de douche.

Les positions d'extrémité de l'élément de mobilier sont les positions précitées entièrement rangé dans la cabine de douche, et ayant pivoté de 180° vis à vis de cette position autour de l'axe AA'. Il peut adopter, conformément à la figure 3, toutes les positions intermédiaires entre ces deux extrêmes.

Le panneau portant la deuxième porte d'accès 6 se retrouve parallèle à la paroi latérale adjacente 12 de la cabine de douche et est accessible à l'utilisateur prenant sa douche.

En outre, la hauteur de fixation de l'élément de mobilier et sa hauteur propre, lui permettent de pivoter au dessus d'un support type table 13, lit, coffre, ou tout autre élément d'agencement interne, disposé à côté de la cabine de douche.

Conformément à la figure 1, l'huisserie peut comporter une porte pivotante supplémentaire 16 munie d'une poignée de préhension externe 17 s'étendant sous le placard escamotable 1 dans sa position escamotée afin de refermer entièrement l'huisserie 7 et plus particulièrement la partie de l'huisserie à hauteur du bac de douche. L'articulation de cette porte supplémentaire 16 peut s'effectuer autour du même axe AA' que celui assurant le pivotement du placard 1, et être éventuellement rendue solidaire en pivotement de ce placard 1, pour s'ouvrir automatiquement sur déplacement du placard à sa position d'ouverture. L'on pourra prévoir à cet effet des attaches internes 18 reliant la face arrière de la porte supplémentaire à l'arrière de la partie basse du placard 1.

L'invention a été présentée en référence à une cabine de douche, mais pourrait très bien être mise en oeuvre au sein de tout autre type de huisserie présentant la forme d'un caisson rigide avec une cavité interne, et ayant des éléments fonctionnels tels que des toilettes, au dessus (ou en dessous pour d'autres types d'éléments fonctionnels) desquels il pourra être rangé. Il faudra veiller à dimensionner l'élément de mobilier pour qu'il n'entre pas en contact avec lesdits équipements fonctionnels dans sa position rangée. On peut éventuellement prévoir que l'élément de mobilier soit articulé vis à vis d'un montant horizontal de l'huisserie, en veillant à respecter le fait que sa diagonale partant de son axe de rotation soit inférieure à la hauteur de l'espace disponible interne de l'huisserie.

## Revendications

1. Elément de mobilier (1) comportant au moins une face plane et un moyen d'articulation en rotation (10) de l'élément par rapport à une huisserie (7) pourvue d'une ouverture, monté sur une arête de l'élément de mobilier qui est destinée à coïncider avec un montant de l'huisserie et destiné à rendre l'élément de mobilier mobile entre une position déployée en dehors de l'huisserie et une position escamotée à l'intérieur de l'huisserie en passant par l'ouverture, l'élément comprenant une première porte d'accès (5) à son contenu interne dans la position escamotée disposée sur la paroi avant de l'élément de mobilier dans la position escamotée et coïncidant avec la paroi avant de l'huisserie, **caractérisé en ce que** **en ce que** l'élément de mobilier (1) est à section polygonale et définit dans sa position escamotée dans l'huisserie, une paroi arrière en vis à vis de la paroi arrière de l'huisserie, et des parois latérales reliant la paroi avant à la paroi arrière et **en ce qu'**il comprend une deuxième porte d'accès (6) à son contenu interne dans la position déployée, disposée sur une paroi latérale adjacente à la paroi avant dans la position escamotée de l'élément de mobilier.

2. Elément selon la revendication 1, **caractérisé en ce que** la deuxième porte d'accès (6) est disposée sur la paroi latérale le plus proche de l'axe de rotation.

3. Ensemble de mobilier comprenant une huisserie et un élément selon l'une quelconque des revendications précédentes, et dans lequel l'axe de rotation de l'élément de mobilier coïncide avec une arête de l'huisserie et en ce que la distance (d) séparant l'arête de l'élément de mobilier et un côté de cet élément de mobilier, étant inférieure à une valeur prédéterminée en fonction de la largeur (D) de l'ouverture de l'huisserie.

4. Ensemble selon la revendication 3, **caractérisé en ce que** dans la position escamotée dans l'huisserie, la paroi arrière de l'élément de mobilier est écartée de la paroi arrière de l'huisserie d'une distance prédéterminée, de façon à laisser un espace disponible pour un équipement de l'huisserie, tel qu'un pommeau de douche.

5. Ensemble selon la revendication 3 ou 4, **caractérisé en ce que** la hauteur de l'élément de mobilier est inférieure à la hauteur interne de l'huisserie.

6. Ensemble selon l'une des revendications 3 à 5, **caractérisé en ce que** la paroi inférieure de l'élément de mobilier est écartée de la paroi inférieure de l'huisserie d'une distance prédéterminée, de façon à laisser un espace disponible pour un équipement de l'huisserie, tel qu'un bac à douche ou pour pivoter au dessus d'un élément de support adjacent à l'huisserie du côté de l'axe de rotation.

7. Agencement intérieur de caravane ou d'autocaravane, **caractérisé en ce qu'**il comprend un ensemble de mobilier selon la revendication 6 et un support adjacent à l'huisserie du côté de l'axe de rotation de l'élément de mobilier, la distance prédéterminée étant calculée pour que l'élément de mobilier pivote au dessus du support dans la position escamotée.

## Patentansprüche

1. Möbelelement (1), umfassend mindestens eine ebene Fläche und ein Mittel zum Drehen (10) des Elements in Bezug auf einen mit einer Öffnung versehenen Rahmen (7), das an einer Kante des Möbelelements montiert ist, die dazu bestimmt ist, mit einem Pfosten des Rahmens übereinzustimmen, und das dazu bestimmt ist, das Möbelelement zwischen einer außerhalb des Rahmens ausgefahrenen Position und einer durch die Öffnung innerhalb des Rahmens eingezogenen Position beweglich zu machen, wobei das Element eine erste Zugangstür (5) zu seinem inneren Inhalt in der eingefahrenen Position umfasst, die an der Vorderwand des Möbelelements in der eingefahrenen Position angeordnet ist und mit der Vorderwand des Rahmens übereinstimmt, **dadurch gekennzeichnet, dass** das Möbelelement (1) einen polygonalen Querschnitt aufweist und in seiner eingefahrenen Position im Rahmen, eine der Rückwand des Rahmens gegenüberliegende Rückwand und Seitenwände, die die Vorderwand mit der Rückwand verbinden, definiert und dass es eine zweite Zugangstür (6) zu seinem inneren Inhalt in der ausgefahrenen Position umfasst, die an einer Seitenwand angrenzend an die Vorderwand in der eingefahrenen Position des Möbelelements angeordnet ist.

2. Element nach Anspruch 1, **dadurch gekennzeichnet, dass** die zweite Zugangstür (6) an der Seitenwand angeordnet ist, die der Drehachse am nächsten liegt.

3. Möbelset, umfassend einen Rahmen und ein Element nach einem der vorstehenden Ansprüche, und worin die Drehachse des Möbelelements mit einer Kante des Rahmens übereinstimmt und worin der Abstand (d) zwischen der Kante des Möbelelements und einer Seite dieses Möbelelements kleiner als ein vorbestimmter Wert in Abhängigkeit von der Breite (D) der Rahmenöffnung ist.

4. Set nach Anspruch 3, **dadurch gekennzeichnet, dass** in der eingefahrenen Position im Rahmen die Rückwand des Möbelelements um einen vorbestimmten Abstand von der Rückwand des Rahmens beabstandet ist, um einen Raum für Rahmenausstattungen, wie beispielsweise einen Duschkopf, zu lassen.

5. Set nach Anspruch 3 oder 4, **dadurch gekennzeichnet, dass** die Höhe des Möbelelements geringer ist als die Innenhöhe des Rahmens.

6. Set nach einem der Ansprüche 3 bis 5, **dadurch gekennzeichnet, dass** die untere Wand des Möbelelements von der unteren Wand des Rahmens um einen vorbestimmten Abstand beabstandet ist, um einen Raum für Rahmenausstattungen, wie beispielsweise eine Duschwanne, zu lassen oder um über ein dem Rahmen benachbartes Stützelement auf der Drehachse zu schwenken.

7. Inneneinrichtung eines Wohnwagens oder Wohnmobils, **dadurch gekennzeichnet, dass** sie einen Möbelset nach Anspruch 6 und eine an den Rahmen angrenzende Halterung auf der Seite der Drehachse des Möbelelements umfasst, wobei der vorbestimmte Abstand so berechnet wird, dass das Möbelelement in der eingefahrenen Position über die Halterung schwenkt.

## Claims

1. Furniture element (1) comprising at least a flat face and a means of rotating articulation (10) of the element relatively to a frame (7) provided with an opening, said means being mounted on an edge of the furniture element which is intended to coincide with an upright of the frame, and intended to make the furniture element movable between an extended position outside the frame and a retracted position inside the frame via the opening, the element comprising a first access door (5) to its internal contents in the retracted position arranged on the front wall of the furniture element in the retracted position and coinciding with the front wall of the frame, **characterized in that** the furniture element (1) has a polygonal cross-section and defines in its retracted position in the frame, a rear wall facing the rear wall of the frame, and side walls connecting the front wall to the rear wall and **in that** it comprises a second access door (6) to its internal contents in the extended position, arranged on a side wall adjacent to the front wall in the retracted position of the furniture element.

2. Element according to claim 1, **characterized in that** the second access door (6) is arranged on the side wall closest to the rotation axis.

3. Furniture set comprising a frame and an element according to any of the previous claims, and wherein the rotation axis of the furniture element coincides with an edge of the frame and in that the distance (d) between the edge of the furniture element and a side of this furniture element is less than a predetermined value depending on the width (D) of the frame opening.

4. Set according to claim 3, **characterized in that** in the retracted position in the frame, the rear wall of the furniture element is spaced from the rear wall of the frame by a predetermined distance, so as to leave a space available for a frame equipment, such as a shower head.

5. Set according to claim 3 or 4, **characterized in that** the height of the furniture element is lower than the internal height of the frame.

6. Set according to one of the claims 3 to 5, **characterized in that** the lower wall of the furniture element is spaced from the lower wall of the frame by a predetermined distance, so as to leave a space available for a frame equipment, such as a shower tray or to rotate above a support element adjacent to the frame on the rotation axis side.

7. Interior layout of a caravan or motor home, **characterized in that** it comprises a furniture set according to claim 6 and a support adjacent to the frame on the side of the rotation axis of the furniture element, the predetermined distance being calculated so that the furniture element rotates over the support in the retracted position.
